# EUROPÄISCHE PATENTSCHRIFT

(11) **EP 1 081 911 B1**
(45) Veröffentlichungstag und Bekanntmachung des Hinweises auf die Patenterteilung: **19.04.2006**
(21) Anmeldenummer: 00115779.1
(22) Anmeldetag: 21.07.2000
(51) Int. Cl.: H04L 29/06

(54) **Verfahren und Vorrichtung zur Authentifikation für eine Vielzahl von Diensten**
Method and apparatus for authenticating multiple services
Installation et procédé d'authentification de plusieurs services

(30) Priorität: 21.07.1999 DE 19934278
(43) Veröffentlichungstag der Anmeldung: 07.03.2001
(73) Patentinhaber: SIEMENS AKTIENGESELLSCHAFT, 80333 München (DE)
(72) Erfinder: Offer, Gero, 70186 Stuttgart (DE)

(56) Entgegenhaltungen:
- WO-A-98/41038
- MOLVA R ET AL: "Strong authentication in intelligent network" INTERNATIONAL CONFERENCE ON UNIVERSAL PERSONAL COMMUNICATIONS, IEEE, NEW YORK, NY, US, 27. September 1994 (1994-09-27), Seiten 629-634, XP002104730

## Beschreibung

Viele Personen nutzen heutzutage verschiedenste Dienste, für die sie eine Zugangsberechtigung benötigen. Als Beispiele seien hier nur genannt: Telekommunikationsdienste wie beispielsweise Abfragen einer Datenbank oder Zugang zum Internet, Mobiltelekommunikationsdienste, elektronische Bankdienste. Nahezu jeder dieser Dienste erfordert als Zugangsberechtigung ein Paßwort, eine PIN (Personal Identification Number) oder eine personenspezifische Karte wie beispielsweise eine Kreditkarte, eine Geldautomatenkarte oder Mobiltelefonkarte.

Da Notizen über Paßwörter oder PINs ein Sicherheitsrisiko darstellen, muß sich jede Person die ihr zugeordneten Zugangsberechtigungen merken und Zugangskarten wie Firmenausweise, Bankkarten, etc. sicher verwahren. Gerade zur Verwaltung einer großen Anzahl von Paßwörtern und PINs sind kleine elektronische Datenbanken in Form eines Taschenrechners erhältlich, in denen die Paßwörter und PINs abgespeichert werden können. Die in einer solchen Datenbank abgelegten Informationen sind wiederum durch ein Paßwort oder PIN gesichert, um unberechtigten Zugriff auf diese sicherheitsrelevanten Daten zu verhindern. Der Datenbankbesitzer braucht sich dann nur noch das Paßwort oder die PIN für den Zugriff auf die in der Datenbank gespeicherten Informationen zu merken. Allerdings muß der Datenbankbesitzer beim Zugriff auf einen Dienst zuerst die Zugangsberechtigung für den Dienst aus seiner Datenbank abfragen und dann manuell in beispielsweise ein Zugangsterminal für den Dienst eintippen. Dies ist weiterhin sehr umständlich und bringt dem Datenbankbesitzer lediglich den Vorteil, daß er sich nicht so viele Zugangsberechtigungen merken muß. Zudem liegen alle Zugangsberechtigungen zusammengefaßt lokal vor, so daß keine Sicherheit gegen Betrug oder Mißbrauch beispielsweise durch Hacker gewährleistet ist.

Die Erfindung betrifft ein Verfahren zur Authentifikation von Nutzern für die Nutzung einer Vielzahl von Diensten unter Verwendung eines Authentifikations-Servers, wobei eine Vielzahl von Nutzern zugeordneten Authentifikationskodes im Authentifikations-Server gespeichert wird und der Authentifikations-Server bei Anforderung eines Dienstes eine Authentifikation mittels eines empfangenen Authentifikationskodes derart durchführt, daß der empfangene Authentifikationskode mit allen im Authentifikations-Server gespeicherten Authentifikationskodes verglichen wird und der Authentifikations-Server bei einem positiven Vergleichsergebnis eine Verbindung zu dem angeforderten Dienst aufbaut.

Ein solches Verfahren ist aus der Druckschrift WO 98/41038 bekannt. Dabei wird ein als Service Management Access Point (SMAP) bezeichnetes Zugangssystems als Authentifikations-Server für die Kontrolle des Zugangs von Nutzern zu verschiedenen Netzwerkelementen verwendet. Bei einer erfolgreichen Authentifikation eines anfragenden Nutzers durch den SMAP wird eine Verbindung zu einem der Netzwerkelemente aufgebaut. Hierdurch wird es dem Nutzer ermöglicht, auf dem Netzwerkelement einen Dienst in Form einer Administration der ihm auf dem Netzwerkelement zugeordneten Daten auszuführen.

Die der vorliegenden Erfindung zu Grunde liegende Aufgabe liegt darin, ein Verfahren vorzuschlagen, das einem Nutzer den Zugang zu einer Vielzahl von über eine spezifische Zugangsberechtigung aufrufbaren Diensten erleichtert.

Diese Aufgabe wird erfindungsgemäß dadurch gelöst, dass jeder Dienst über eine dienstspezifische und/oder teilnehmerspezifische Zugangsberechtigung aufgerufen wird, in dem Authentifikations-Server mindestens eine dienstspezifische bzw. teilnehmerspezifische Zugangsberechtigung für jeden der Dienste gespeichert wird, jeder Authentifikationskode der oder den dienstspezifischen bzw. teilnehmerspezifischen Zugangsberechtigungen eines Nutzers zugeordnet wird und der Authentifikations-Server die Verbindung zu dem angeforderten Dienst unter Benutzung der gespeicherten Zugangsberechtigung, die dem Authentifikationskode zugeordnet ist, aufbaut.

Vorteilhafterweise sind bei diesem Verfahren alle Zugangsberechtigungen eines Nutzers für eine Vielzahl von Diensten in einem Authentifikations-Server zentral gespeichert. Der Authentifikations-Server kann dabei Teil eines Telekommunikationsnetzes sein und beispielsweise von einem Nutzer zur Nutzung von besonderen Diensten des Telekommunikationsnetzes über eine dafür vorgesehene Nummer angewählt werden. Sobald zwischen einem Teilnehmerendgerät des Nutzers und dem Authentifikations-Server eine Verbindung besteht, kann der Nutzer beispielsweise durch die Eingabe eines dienstspezifischen Kodes einen der besonderen Dienste des Telekommunikationsnetzes anfordern. Der dienstspezifische Kode kann dazu als Teil einer Rufnummer für einen Verbindungsaufbau zum Authentifikations-Server gebildet sein oder der Authentifikations-Server weist eine "Prompt & Collect"-Funktionalität auf, in der ein dienstspezifischer Kode vom Nutzer übermittelt und daraufhin der Nutzer sich durch Übertragung seines Authentifikationskodes authentifiziert. Der Authentifikationskode entspricht sozusagen einem zentralen Zugangsschlüssel zu den einzelnen Zugangsberechtigungen für Dienste. Der Nutzer benötigt somit nur noch den Authentifikationskode, um Dienste anzufordern. Zur Erhöhung der Sicherheit kann die Übertragung des Authentifikationskodes zum Authentifikations-Server zusätzlich insbesondere zeitlich verschlüsselt werden.

Die Erfindung betrifft ferner ein Verfahren zur universellen Authentifikation in einem intelligenten Netz für eine Vielzahl von IN-Diensten unter Verwendung eines Authentifikations-Servers, wobei eine Vielzahl von Nutzern zugeordneten Authentifikationskodes im Authentifikations-Server gespeichert wird und der Authentifikations-Server bei Anforderung eines IN-Dienstes eine Authentifikation mittels eines empfangenen Authentifikationskodes derart durchführt, daß der empfangene Authentifikationskode mit allen im Authentifikations-Server gespeicherten Authentifikationskodes verglichen wird und der Authentifikations-Server bei einem positiven Vergleichsergebnis eine Verbindung zu dem angeforderten IN-Dienst aufbaut.

Ein solches Verfahren wird ebenfalls in der bereits erwähnten Druckschrift WO 98/41038 beschrieben. Bei dem bekannten Verfahren kontrolliert ein Authentifikations-Server in Form eines Service Management Access Points (SMAP) den Zugang von Nutzern zu verschiedenen Netzwerkelementen. Nach einer erfolgreichen Authentifikation besteht für einen anfragenden Nutzer dabei die Möglichkeit, auf einem der Netzwerkelemente eine Administration der ihm zugeordneten Daten von IN-Diensten durchzuführen.

Der vorliegenden Erfindung liegt weiter die Aufgabe zu Grunde, ein weiteres Verfahren vorzuschlagen, das einem Nutzer den Zugang zu einer Vielzahl von über eine spezifische Zugangsberechtigung aufrufbaren IN-Diensten erleichtert.

Diese Aufgabe wird erfindungsgemäß dadurch gelöst, dass jeder IN-Dienst über eine dienstspezifische und/oder teilnehmerspezifische Zugangsberechtigung aufgerufen wird, der Authentifikations-Server in einem Service-Control-Point des intelligenten Netzes vorgesehen ist, in dem Authentifikations-Server mindestens eine dienstspezifische bzw. teilnehmerspezifische Zugangsberechtigung für jeden der IN-Dienste gespeichert wird, jeder Authentifikationskode der oder den dienstspezifischen bzw. teilnehmerspezifischen Zugangsberechtigungen eines Nutzers zugeordnet wird und der Authentifikations-Server die Verbindung zu dem angeforderten IN-Dienst unter Benutzung der gespeicherten Zugangsberechtigung, die dem Authentifikationskode zugeordnet ist, aufbaut.

Die Erfindung betrifft weiterhin eine Vorrichtung zur Authentifikation für eine Vielzahl von Diensten, wobei
ein Authentifikations-Server vorgesehen ist, der einen Speicher, in dem Authentifikationskodes gespeichert sind, eine Vergleichseinrichtung, die einen empfangenen Authentifikationskode mit den im Speicher gespeicherten Authentifikationskodes vergleicht und eine Verbindungsaufbaueinrichtung zum Aufbau einer Verbindung zu einem angeforderten Dienst aufweist.

Eine entsprechende Vorrichtung ist in Form des Service Management Access Points (SMAP) ebenfalls aus der bereits erwähnten Druckschrift WO 98/41038 bekannt.

Bezüglich der Vorrichtung liegt der vorliegenden Erfindung die Aufgabe zu Grunde, eine Vorrichtung vorzuschlagen, die einem Nutzer den Zugang zu einer Vielzahl von über eine spezifische Zugangsberechtigung aufrufbaren Diensten erleichtert.

Diese Aufgabe wird erfindungsgemäß dadurch gelöst, dass in dem Speicher mindestens eine dienstspezifische Zugangsberechtigung für einen Dienst gespeichert ist und die Verbindungsaufbaueinrichtung zum Aufbau der Verbindung zu dem angeforderten Dienst unter Benutzung der gespeicherten Zugangsberechtigung ausgebildet ist.

Weitere Vorteile und Anwendungsmöglichkeiten der Erfindung ergeben sich aus der nachfolgenden Beschreibung in Verbindung mit der Zeichnung. In der Zeichnung zeigt:
- Fig. 1: ein Blockschaltbild, das den Zugriff über verschiedene Zugänge auf verschieden Dienste darstellt,
- Fig. 2: ein Blockschaltbild, das den Zugriff über ein elektronisches Zahlungsterminal auf einen Bank-Server darstellt,
- Fig. 3: ein Blockschaltbild, das den Zugriff über ein Terminal auf einen Polizeidaten-Server darstellt, und
- Fig. 4: ein Blockschaltbild mit dem Aufbau des Authentifikations-Servers.

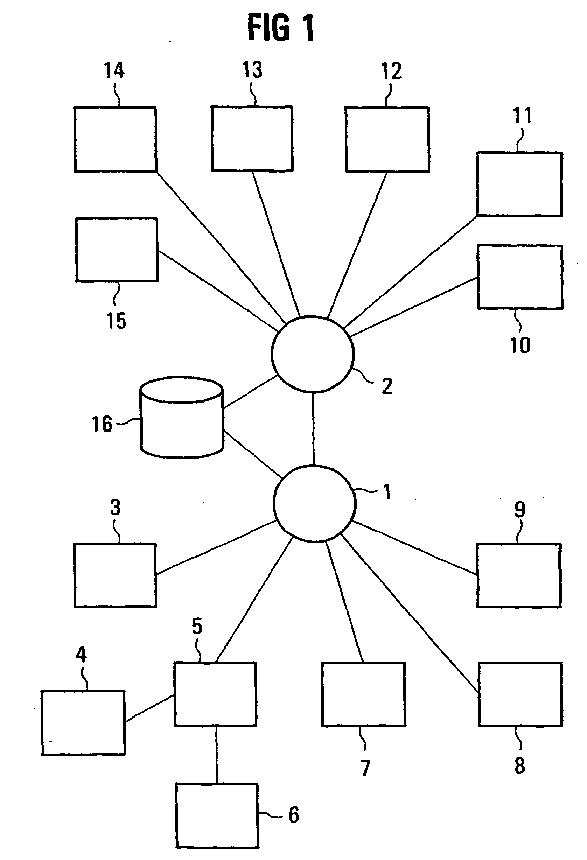

In Fig. 1 ist der Ausschnitt eines intelligenten Netzes mit einem Service-Switching-Point 1 (SSP) und einem Service-Control-Point 2 (SCP) dargestellt.

Der Service-Switching-Point 1 stellt die Schnittstelle zwischen dem intelligenten Netz und dem öffentlichen Telefonnetz (PSTN: Public Switch Telefone Network) dar. Über eine Vielzahl verschiedener Einrichtungen kann über den Service-Switching-Point auf die verschiedenen Dienste des intelligenten Netzes zugegriffen werden.

Solche Einrichtungen können beispielsweise ein Mobilfunk-Telefon 3 oder ein analoges Telefon 4 und ein digitales Telefon 6, die beide über eine Nebenstellenanlage (PBX: Private Branche Exchange) 5 mit dem Service-Switching-Point 1 verbunden sind, ein Computer mit einem Modem 7, ein Computer mit einem LAN-Anschluß 8 oder ein elektronisches Zahlungsterminal 9 sein. Die vorgenannte Aufzählung ist dabei nicht abschließend, es sind jederzeit weitere Einrichtungen für den Zugriff auf Dienste des intelligenten Netzes denkbar.

Der Service-Switching-Point 1 ist mit einem Service-Control-Point 2 des intelligenten Netzes verbunden. Der Service-Control-Point 2 führt dabei die Dienste des intelligenten Netzes, die sogenannten IN-Dienste, aus. Dazu baut der Service-Control-Point 2 eine Verbindung zu einem Dienst-Server, der einen entsprechenden IN-Dienst ausführt, auf und fordert von diesem den Dienst an.

Als Dienst-Server sind beispielsweise ein Bank-Server 10, ein Universal-Personal-Telecommunication-SCP 11, ein Virtual Private Network 12, ein Home Location Register/Corporate Network 13, ein Data-VPN 14 und ein Kreditkarten-Server 15 vorgesehen, die mit dem Service Control Point 2 verbunden sind.

Mit dem Service-Switching-Point 1 und dem Service-Control-Point 2 ist ferner ein Authentifikations-Server 16 verbunden, der zur Authentifikation von Zugriffen auf die IN-Dienste vorgesehen ist.

Wird beispielsweise über einen Computer mit Modem 7 eine Verbindung zu einem Bank-Server 10 für z.B. eine Geldtransaktion angefordert, so leitet der Service-Switching-Point 1 die Dienstanforderung an den Authentifikations-Server 16 weiter, der den Zugriff dadurch authentifiziert, daß er einen von dem Computer mit Modem 7 übermittelten Authentifikationskode eines Nutzers mit gespeicherten Authentifikationskodes vergleicht und bei einem positiven Vergleichsergebnis über den Service-Control-Point 2 den IN-Dienst bei dem Bank-Server 10 anfordert. Nach erfolgreicher Authentifikation steht somit eine Verbindung zwischen dem Computer mit Modem 7 und dem Bank-Server 10 zur Verfügung. Analog verläuft beispielsweise ein Zugriff über den Computer mit Modem 7 auf einen IN-Dienst des Kreditkarten-Servers 15. Auch bei der Wahl einer anderen Einrichtung für den Zugang, beispielsweise dem Mobilfunk-Telefon 3, verläuft der Zugang ähnlich. Hierzu überträgt das Mobiltelefon den Authentifikationskode an den Authentifikations-Server 16.

Der Authentifikationskode kann bei einem Zugang über einen Computer per Tastatur von einem Nutzer eingegeben werden oder beispielsweise auf einer SMART-Card hinterlegt sein. Weist eine Zugangseinrichtung beispielsweise einen Fingerabdruck-Sensor auf, so kann der Authentifikationskode als verschlüsselter Fingerabdruck im Authentifikations-Server 16 gespeichert sein, so daß ein Nutzer sich durch seinen Fingerabdruck authentifiziert. Dazu sind im Authentifikations-Server Daten über den Fingerabdruck sowie die zugehörigen Verschlüsselungsinformationen, die zur verschlüsselten Übertragung der Fingerabdruck-Daten dienen, gespeichert.

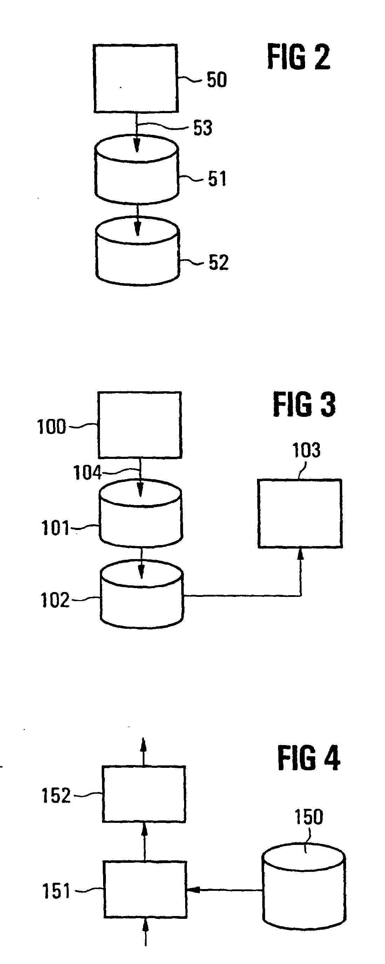

In Fig. 2 ist skizziert, wie über ein beliebiges Terminal 50, beispielsweise ein Computerterminal, auf einen Bank-Server 52 über einen Authentifikations-Server 51 zugegriffen wird.

Hierzu ist lediglich zu bemerken, daß die Übermittlung des Authentifikationskodes vom Terminal 50 an den Authentifikations-Server 51 mittels einer verschlüsselten Übertragung stattfindet. Dies verhindert unerlaubte Zugriffe auf den Authentifikationskode wie beispielsweise Abhörmaßnahmen auf der Übertragungsstrecke zwischen dem Terminal 50 und dem Authentifikations-Server 51. Für eine zusätzlich erhöhte Sicherheit wechselt der Algorithmus zur Verschlüsselung zeitlich. Diese Anwendung bietet sich beispielsweise zum Transfer von Geldbeträgen auf eine elektronische Geldbörse oder bei der Bezahlung per Kredit- und/oder Accountkarte an.

Ähnlich verläuft der in Fig. 3 dargestellte Zugriff auf die Daten eines Polizeidaten-Servers 102. Einerseits ist der Zugriff ohne Authentifikation mittels eines Polizei-Terminal 103 möglich, auf das ausschließlich dafür autorisierte Personen wie beispielsweise Polizeibeamte Zugriff haben, andererseits kann über ein Terminal 100 und einen Authentifikations-Server 101 ebenfalls auf die Daten des Polizeidaten-Servers 102 zugegriffen werden. Dies erleichtert beispielsweise den Zugriff auf Polizeidaten über ein mobiles Terminal in einem Polizeiauto oder von einer Polizeistreife. Hierbei ist wiederum eine verschlüsselte Übertragung 104 zwischen dem Terminal 100 und dem Authentifikations-Server 101 vorgesehen.

In Fig. 4 ist der Aufbau des Authentifikations-Servers skizziert. Der Authentifikations-Server weist einen Zugangsberechtigungsspeicher 150 auf, in dem eine Vielzahl von Authentifikationskodes gespeichert sind. Für jeden Authentifikationskode ist zudem gespeichert, für welche Dienste ein Nutzer zugelassen ist. Eine Vergleichseinrichtung 151 vergleicht dabei einen übermittelten Authentifikationskode mit allen im Zugangsberechtigungsspeicher 150 abgelegten Authentifikationskodes und signalisiert bei einem positiven Vergleich einer Verbindungsaufbaueinrichtung 152, welcher Dienst angefordert werden soll.

## Patentansprüche

1. Verfahren zur Authentifikation von Nutzern für die Nutzung einer Vielzahl von Diensten unter Verwendung eines Authentifikations-Servers (16; 51; 101), wobei
- eine Vielzahl von Nutzern zugeordneten Authentifikationskodes im Authentifikations-Server (16; 51; 101) gespeichert wird und
- der Authentifikations-Server (16; 51; 101) bei Anforderung eines Dienstes eine Authentifikation mittels eines empfangenen Authentifikationskodes derart durchführt, daß der empfangene Authentifikationskode mit allen im Authentifikations-Server (16; 51; 101) gespeicherten Authentifikationskodes verglichen wird und der Authentifikations-Server (16; 51; 101) bei einem positiven Vergleichsergebnis eine Verbindung zu dem angeforderten Dienst aufbaut,
**dadurch gekennzeichnet, dass**
- jeder Dienst (10 - 15; 52; 102) über eine dienstspezifische und/oder teilnehmerspezifische Zugangsberechtigung aufgerufen wird,
- in dem Authentifikations-Server (16; 51; 101) mindestens eine dienstspezifische bzw. teilnehmerspezifische Zugangsberechtigung für jeden der Dienste (10 - 15; 52; 102) gespeichert wird,
- jeder Authentifikationskode der oder den dienstspezifischen bzw. teilnehmerspezifischen Zugangsberechtigungen eines Nutzers zugeordnet wird und
- der Authentifikations-Server (16; 51; 101) die Verbindung zu dem angeforderten Dienst unter Benutzung der gespeicherten Zugangsberechtigung, die dem Authentifikationskode zugeordnet ist, aufbaut.

2. Verfahren zur universellen Authentifikation in einem intelligenten Netz für eine Vielzahl von IN-Diensten unter Verwendung eines Authentifikations-Servers (16; 51; 101), wobei
- eine Vielzahl von Nutzern zugeordneten Authentifikationskodes im Authentifikations-Server (16; 51; 101) gespeichert wird und
- der Authentifikations-Server (16; 51; 101) bei Anforderung eines IN-Dienstes eine Authentifikation mittels eines empfangenen Authentifikationskodes derart durchführt, daß der empfangene Authentifikationskode mit allen im Authentifikations-Server (16; 51; 101) gespeicherten Authentifikationskodes verglichen wird und der Authentifikations-Server (16; 51; 101) bei einem positiven Vergleichsergebnis eine Verbindung zu dem angeforderten IN-Dienst aufbaut,
**dadurch gekennzeichnet, dass**
- jeder IN-Dienst (10 - 15; 52; 102) über eine dienstspezifische und/oder teilnehmerspezifische Zugangsberechtigung aufgerufen wird,
- der Authentifikations-Server (16; 51; 101) in einem Service-Control-Point des intelligenten Netzes vorgesehen ist,
- in dem Authentifikations-Server (16; 51; 101) mindestens eine dienstspezifische bzw. teilnehmerspezifische Zugangsberechtigung für jeden der IN-Dienste (10 - 15; 52; 102) gespeichert wird,
- jeder Authentifikationskode der oder den dienstspezifischen bzw. teilnehmerspezifischen Zugangsberechtigungen eines Nutzers zugeordnet wird und
- der Authentifikations-Server (16; 51; 101) die Verbindung zu dem angeforderten IN-Dienst unter Benutzung der gespeicherten Zugangsberechtigung, die dem Authentifikationskode zugeordnet ist, aufbaut.

3. Vorrichtung zur Authentifikation für eine Vielzahl von Diensten, wobei ein Authentifikations-Server (16; 51; 101) vorgesehen ist, der
- einen Speicher (150), in dem Authentifikationskodes gespeichert sind,
- eine Vergleichseinrichtung (151), die so ausgebildet ist, dass sie einen empfangenen Authentifikationskode mit den im Speicher (150) gespeicherten Authentifikationskodes vergleicht und
- eine Verbindungsaufbaueinrichtung (152) zum Aufbau einer Verbindung zu einem angeforderten Dienst aufweist,
**dadurch gekennzeichnet, dass**
- in dem Speicher (150) mindestens eine dienstspezifische bzw. teilnehmerspezifische Zugangsberechtigung für einen Dienst (10 - 15; 52; 102) gespeichert ist und
- die Verbindungsaufbaueinrichtung (152) zum Aufbau der Verbindung zu dem angeforderten Dienst unter Benutzung der gespeicherten Zugangsberechtigung ausgebildet ist.

## Claims

1. Method for authentication of users for the use of a multiplicity of services using an authentication server (16; 51; 101), where
- a multiplicity of authentication codes assigned to users are stored in the authentication server (16; 51; 101), and
- in the event of a service being requested, the authentication server (16; 51; 101) carries out authentication by means of a received authentication code in such a way that the received authentication code is compared with all the authentication codes stored in the authentication server (16; 51; 101) and the authentication server (16; 51; 101) sets up a connection to the requested service in the event of a positive comparison result,
**characterized in that**
- each service (10-15; 52; 102) is called via a service-specific and/or subscriber-specific access authorization,
- at least one service-specific and/or subscriber-specific access authorization for each of the services (10-15; 52; 102) is stored in the authentication server (16; 51; 101),
- each authentication code is assigned to the service-specific and/or subscriber-specific access authorization or authorizations of a user, and
- the authentication server (16; 51; 101) sets up the connection to the requested service using the stored access authorization which is assigned to the authentication code.

2. Method for universal authentication in an intelligent network for a multiplicity of IN services using an authentication server (16; 51; 101), where
- a multiplicity of authentication codes assigned to users are stored in the authentication server (16; 51; 101), and
- in the event of an IN service being requested, the authentication server (16; 51; 101) carries out authentication by means of a received authentication code in such a way that the received authentication code is compared with all the authentication codes stored in the authentication server (16; 51; 101) and the authentication server (16; 51; 101) sets up a connection to the requested IN service in the event of a positive comparison result,
**characterized in that**
- each IN service (10-15; 52; 102) is called via a service-specific and/or subscriber-specific access authorization,
- the authentication server (16; 51; 101) is provided in a service control point of the intelligent network,
- at least one service-specific and/or subscriber-specific access authorization for each of the IN services (10-15; 52; 102) is stored in the authentication server (16; 51; 101),
- each authentication code is assigned to the service-specific and/or subscriber-specific access authorization or authorizations of a user, and
- the authentication server (16; 51; 101) sets up the connection to the requested IN service using the stored access authorization which is assigned to the authentication code.

3. Apparatus for authentication for a multiplicity of services, where an authentication server (16; 51; 101) is provided, which has
- a memory (150), in which authentication codes are stored,
- a comparison device (151), which is designed such that it compares a received authentication code with the authentication codes stored in the memory (150), and
- a connection setup device (152) for setting up a connection to a requested service,
**characterized in that**
- at least one service-specific and/or subscriber-specific access authorization for a service (10-15; 52; 102) is stored in the memory (150), and
- the connection setup device (152) is designed to set up the connection to the requested service using the stored access authorization.

## Revendications

1. Procédé d'authentification d'utilisateurs pour l'utilisation de plusieurs services en employant un serveur d'authentification (16 ; 51 ; 101), dans lequel
- on mémorise plusieurs codes d'authentification associés à des utilisateurs dans le serveur d'authentification (16 ; 51 ; 101), et
- lors de la demande d'un service, le serveur d'authentification (16 ; 51 ; 101) effectue une authentification au moyen d'un code d'authentification reçu de telle sorte que le code d'authentification reçu est comparé à tous les codes d'authentification mémorisés dans le serveur d'authentification (16 ; 51 ; 101) et que, en présence d'un résultat de comparaison positif, le serveur d'authentification (16 ; 51 ; 101) établit une liaison vers le service demandé,
**caractérisé par le fait que**
- on demande chaque service (10 à 15 ; 52 ; 102) par l'intermédiaire d'une autorisation d'accès spécifique au service et/ou spécifique à l'abonné,
- dans le serveur d'authentification (16 ; 51 ; 101), on mémorise au moins une autorisation d'accès spécifique au service et/ou spécifique à l'abonné pour chacun des services (10 à 15 ; 52 ; 102),
- on associe chaque code d'authentification à l'autorisation d'accès ou aux autorisations d'accès, spécifiques au service et/ou spécifiques à l'abonné, d'un utilisateur, et
- le serveur d'authentification (16 ; 51 ; 101) établit la liaison vers le service demandé en utilisant l'autorisation d'accès mémorisée qui est associée au code d'authentification.

2. Procédé d'authentification universelle dans un réseau intelligent dit IN pour plusieurs services IN en employant un serveur d'authentification (16 ; 51 ; 101), dans lequel
- on mémorise plusieurs codes d'authentification associés à des utilisateurs dans le serveur d'authentification (16 ; 51 ; 101), et
- lors de la demande d'un service IN, le serveur d'authentification (16 ; 51 ; 101) effectue une authentification au moyen d'un code d'authentification reçu de telle sorte que le code d'authentification reçu est comparé à tous les codes d'authentification mémorisés dans le serveur d'authentification (16 ; 51 ; 101) et que, en présence d'un résultat de comparaison positif, le serveur d'authentification (16 ; 51 ; 101) établit une liaison vers le service IN demandé,
**caractérisé par le fait que**
- on demande chaque service IN (10 à 15 ; 52 ; 102) par l'intermédiaire d'une autorisation d'accès spécifique au service et/ou spécifique à l'abonné,
- le serveur d'authentification (16 ; 51 ; 101) est prévu dans un point de contrôle de service du réseau intelligent,
- dans le serveur d'authentification (16 ; 51 ; 101), on mémorise au moins une autorisation d'accès spécifique au service et/ou spécifique à l'abonné pour chacun des services IN (10 à 15 ; 52 ; 102),
- on associe chaque code d'authentification à l'autorisation d'accès ou aux autorisations d'accès, spécifiques au service et/ou spécifiques à l'abonné, d'un utilisateur, et
- le serveur d'authentification (16 ; 51 ; 101) établit la liaison vers le service IN demandé en utilisant l'autorisation d'accès mémorisée qui est associée au code d'authentification.

3. Dispositif d'authentification de plusieurs services, un serveur d'authentification (16 ; 51 ; 101) étant prévu, lequel comporte
- une mémoire (150) dans laquelle des codes d'authentification sont mémorisés,
- un dispositif de comparaison (151) qui est conçu de telle sorte qu'il compare un code d'authentification reçu aux codes d'authentification mémorisés dans la mémoire (150), et
- un dispositif d'établissement de liaison (152) pour établir une liaison vers un service demandé,
**caractérisé par le fait que**
- au moins une autorisation d'accès spécifique au service et/ou spécifique à l'abonné pour un service (10 à 15 ; 52 ; 102) est mémorisée dans la mémoire (150), et
- le dispositif d'établissement de liaison (152) est conçu pour établir la liaison vers le service demandé en utilisant l'autorisation d'accès mémorisée.
